# EUROPEAN PATENT APPLICATION

(11) **EP 3 338 966 A1**
(43) Date of publication of application: **27.06.2018**
(21) Application number: 17206299.4
(22) Date of filing: 08.12.2017
(51) Int. Cl.: B25J 9/10, B25J 17/00, B25J 19/00

(54) **ANGULAR DISPLACEMENT DEVICE**

(30) Priority: 08.12.2016 GB 201620911
(71) Applicant: Majoe, Dennis, Eastleigh, Hampshire SO50 9LH (GB)
(72) Inventor: Majoe, Dennis, Eastleigh, Hampshire SO50 9LH (GB)
(74) Representative: Brooks, Nigel Samuel

(57) **Abstract**

A device for angularly displacing two members with respect to each other about a pivot, the device comprising:
• a stiff element having opposite end pivots, one to one of the members and the other being a restraining pivot, and
• an electromagnetic force generator arranged to act transversely of the stiff element, which is stiff against bending by force from the generator, and to displace the pivot to the one members, with the members pivot being restrained,
the moment arm of the one pivot of the stiff member to the members' pivot being less than the stiff element's length.

The device includes a second stiff element having opposite end pivots, one to the other of the members and the other being common with the restraining pivot of the said stiff element, the two stiff elements arrange in a V configuration, the moment arm of the members pivot being less than the stiff element's length, the moment arm of the one pivots of the stiff members to the members' pivot being substantially equal and the force generator is arranged to act between the two stiff elements.

## Description

The present invention relates to an angular displacement device and in particular but not exclusively an angular displacement device for a robotic limb.

In many robotic designs DC servo motors with gearing or hydraulic actuators are used to generate rotational torque at a limb joint.

Hydraulics systems tend to be bulky and difficult to integrate into multi degree of freedom designs. Geared DC motors must trade off high torque achieved with gearing with a loss in the speed of actuation. In both cases when the actuators are integrated on an artificial limb or limb supporting structure levers, chains or other transmission systems are necessary and as such the motor does not intentionally become part of the load bearing and force delivery structure.

The advantage of removing any gearing and transmission trains is an improved efficiency and improved control that comes from direct drive. With a direct drive motor having no gearing, the speed of actuation is superior to a geared DC motor. However, the actuator must still provide high torque equivalent to a geared DC motor. A very high standing torque DC motor with equivalent torque of a geared motor can be designed by making a dimensionally larger motor. However, this larger motor would be much heavier and any torque benefits would be lost through a diminishing return.

The object of the present invention is to provide an improved angular displacement device for a robotic limb.

According to the invention there is provided a device for angularly displacing two members with respect to each other about a pivot, the device comprising:
- a stiff element having opposite end pivots, one to one of the members and the other being a restraining pivot, and
- a force generator arranged to act transversely of the stiff element, which is stiff against bending by force from the generator, and to displace the pivot to the one members, with the members pivot being restrained,
the moment arm of the one pivot of the stiff member to the members' pivot being less than the stiff element's length.

Normally the force generator will be a high force, low displacement device - as opposed to a low force, high force device. Preferably it is an electromagnetic device.

Normally, the ratio of the stiff element's length to the moment arm is between 2:1 and 20:1. Preferably, the ratio is between 2.5:1 and 15:1, more preferably still the ratio is between 3:1 and 10:1 and most preferably the ratio is between 4:1 and 8:1.

The stiff element can be arranged separate from the other of the two displaceable members. It can also be arranged to extend inside the other displaceable member.

The restraining pivot can on one of the displaceable members and the force generator is arranged to act between that member and stiff element. Conveniently in such embodiment, the restraining pivot is arranged for foreshortening, preferably with a transverse link or a slot generally aligned with the stiff element.

In another embodiment there is a second stiff element having opposite end pivots, one to the other of the members and the other being common with the restraining pivot of the said stiff element. The two stiff elements may be arranged in a V configuration, the moment arm of the members pivot being less than the stiff element's length, the moment arm of the one pivots of the stiff members to the members' pivot being substantially equal and the force generator is arranged to act between the two stiff elements.

It is envisaged that the device may comprise a further two stiff elements and a further force generator pivotally connected to the members in a corresponding manner.

Further, it could include one or more further sets of two stiff elements and a force generator arranged in W formation between one of the stiff elements pivoted to the members.

Preferably, one of the force generators, or set thereof, is adapted to displace the members angularly in one direction and the other is arranged to displace them in the other direction.

It is envisaged that the force generators may be double acting, each being adapted to dispace the members angularly in either direction.

Normally, the force generators are electro magnetic, the or each stiff member carrying a respective electromagnet. Therefore, it is preferred that the or each stiff member and the angularly displaceable members are non-magntic.

It is envisaged that a lock or brake for holding the members in their relative position to which they are displaceable by the force generator is included. Preferably the lock is a hydraulic piston and cyinder unit having a valve and an accumulator, the valve being arranged to be closed to lock displacement of fluid from the unit on actuation of the force generator

To help understanding of the invention, two specific embodiment with a variant thereof will now be described by way of example and with reference to the accompanying drawings, in which:
Figure 1 is a side view an angular displacement device according to the invention in one position,
Figure 2 is a similar view of the device of Figure 1 in another position,
Figure 3 is a plan view of the device of Figure 1,
Figure 4 is a cross-sectional side view, on the line IV-IV in Figure 3, of the device of Figure 1,
Figure 5 is a perspective view of the angular displacement device of Figure 1,
Figure 6 is a view similar to Figure 1 of a variant thereof, with force generating electromagnets duplicated,
Figure 7 is a diagrammatic side view of a second angular displacement device according to the invention and
Figure 8 is a view similar to Figure 7 of the second device on a different plane.

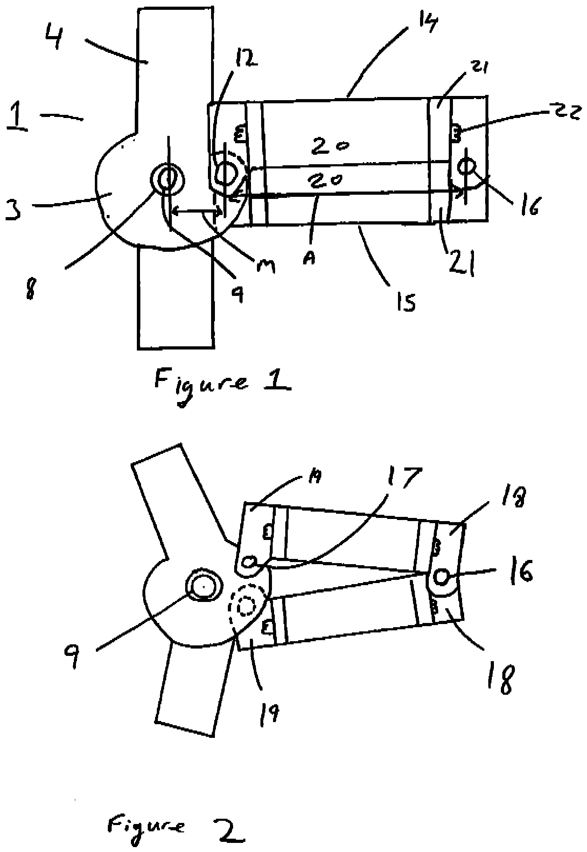

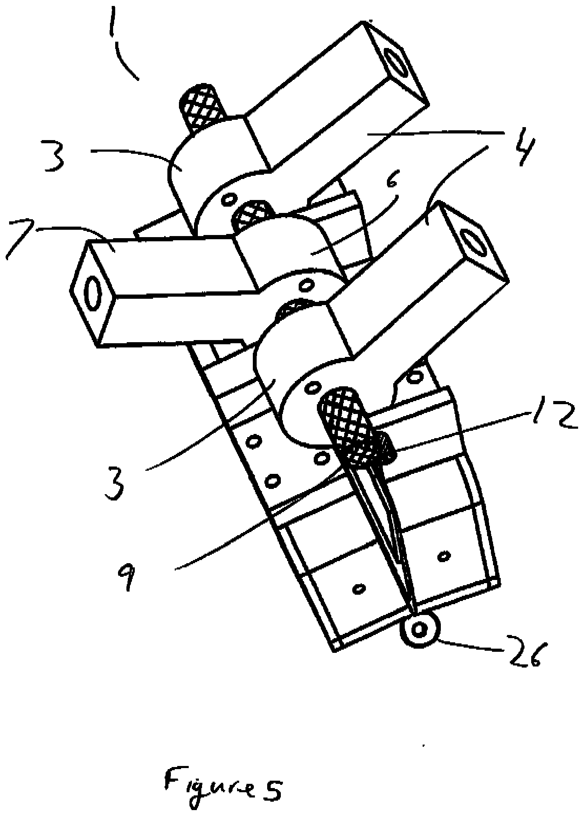

Referring to Figures 1 to 5 of the drawings, the angular displacement device 1 has two members 1,2, having bosses 3 and respective projections 4 in one direction, and a third member 5 between the members 1,2. It has a boss 6 and a projection 7 in the other direction. The bosses have central bores 8 through which extends a main pivot pin 9. These components are of plastics material, suitably glass filled nylon for the members and ptfe for the pin, to avoid interference with the electromagnetic components to be described.

The bosses have eccentric bores 11 accommodating pins 12 via which the projections 4,7 can be moved between their positions shown in Figures 1 & 2 by the actuating arrangements to one side of the main pivot pin 9. Essentially these comprise an upper stiff arm 14 and a lower stiff arm 15 pivoted together remotely i.e. distally from the main pivot 9 at an arm pivot 16. When open as in Figure 2, the arms are in V arrangement and can be thought of as V members. Their other ends, proximal to the main pivot are pivotally connected to respective bosses 4,7 by secondary pivots 17 at the pins 12

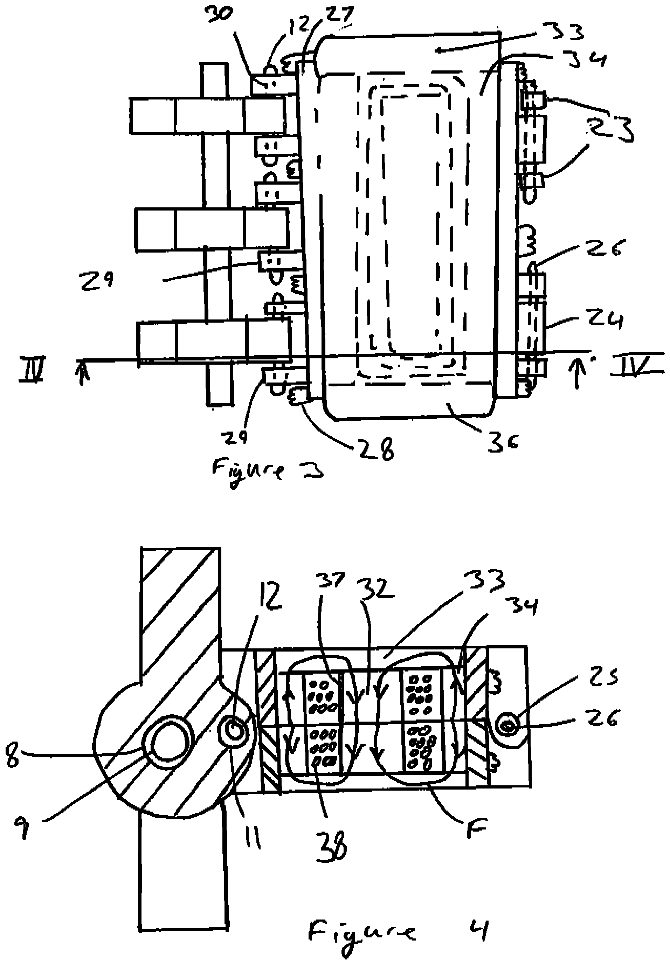

The arms are compound members, being made up of plastics, suitably glass filled nylon, moulded hinge and pivot fittings 18,19 at opposite ends - as viewed in Figures 1 & 2, albeit that the arms are wide as seen in Figure 3 - and of electromagnets 20 between the hinge fittings. The arm pivot is provided at the hinge fittings 18. These have flanges 21 by means of which they are attached to the electromagnets via screws 22. The hinge fittings 18 each have a pair of lugs 23 between which is accommodated a block 24 of the other of the fittings. The lugs and bosses have bores 25 for hinge pins 26. Thus the arms are pivoted together in V formation.

The proximal pivot fittings 19 are essentially similar, with flanges 27 attached by screws 28 to the electromagnets and three pairs of lugs 29 with bores 30 for the pivot pins 12. The bosses 3,6 are fitted between the pairs of lugs, with the pivot pins passing through the bores 11.

Two points should be noted about the pivot arrangements just described:
- The pivot pins 9 12 and 26 are all parallel and all coplanar, at least when the electromagnets described below are fully closed against each other, this latter feature being achieved the lugs 23,29 and the bosses all being offset whereby central axes of the bores 25,30 are coplanar with opposed faces 31 of the electromagnets when closed in the Figure 1 position;
- The lever arm A from the arms/displaceable members pivot pins 12 to the pins 26 for the arms pivot 16 are considerably longer than the lever arm M from the pins 12 to the pin 9 for the main pivot of the angularly displaceable members at their bores 8. The result is that comparatively small angular movement of the arms results in considerably larger angular movement of the displaceable members, as shown by comparison of the position of these components in Figures 1 & 2.

The electromagnets will now be described. They comprise ferromagnetic, suitably soft iron, components as follows:
- A rectangular central pole piece 32,
- An outer plate 33, to which the central pole piece is attached by non-shown screws,
- A peripheral pole piece 34, made up of transverse edge pieces 35 and cross edge pieces 36. The pole pieces 32 and 34 leave a rectangular winding slot 37 between them. They are coplanar at the faces 32,
- A winding 38 in the slot 37.
The magnetic arrangement is such that when the coils is energised to provide a South pole in the central pole piece at the face 32, a North pole is provided around the peripheral pole piece. Flux lines F are shown in Figure 4. When the electromagnets of both arms are energised in the same way, they repel each other moving the device to the Figure 2 condition. When on the other hand they are oppositely energised they attract each other moving the device to the Figure 1 condition.

This magnetic attraction and repulsion is a relatively short distance high force effect as is well known of magnetism. The ratio of the lever arms described above enables the high force of the magnetism to provide a useful angular displacement force / torque at the projections 4,7. An unexpected advantage of the device is that if it is modified to reduce the lever arm of the M of the arms action on the bosses and the actuatable members, for a given angular displacement of the latter, the electromagnets are closer together. Whilst the torque exerted is reduced by the reduced lever arm the force generated by the magnets has increased by a greater proportion, in proportion to the inverse of the square of the separation of the pole pieces. The result is that the torque available to move the actuatable members actually increases. Thus within the practical engineering restraints of applying torque by pins close together, there is advantage in making the lever arm M smaller. The inventor believes this to be counter-intuitive.

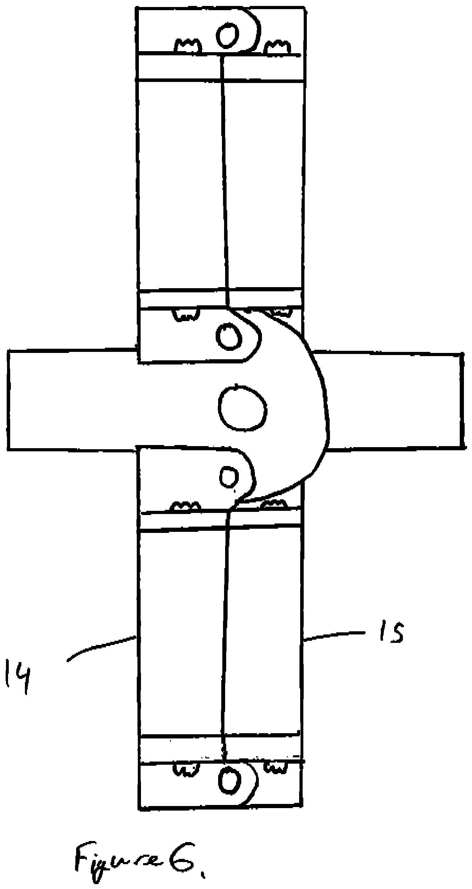

Figure 6 shows a variant in which further V members are provided on the opposite side of the members 1,2,5 and pivotally connect them in the same manner as the arms 14,15.

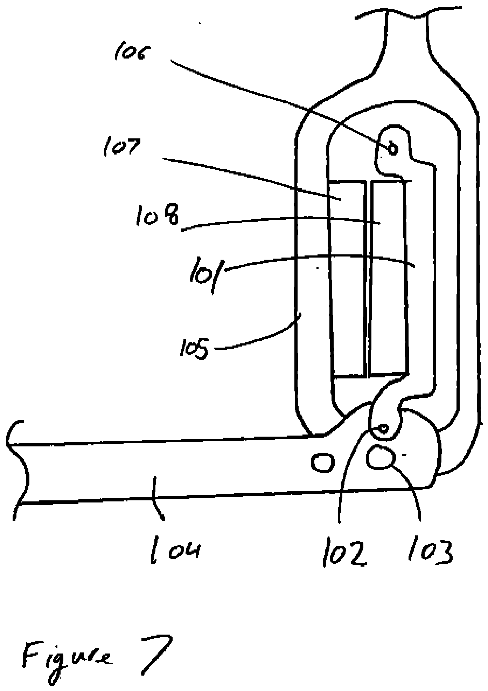

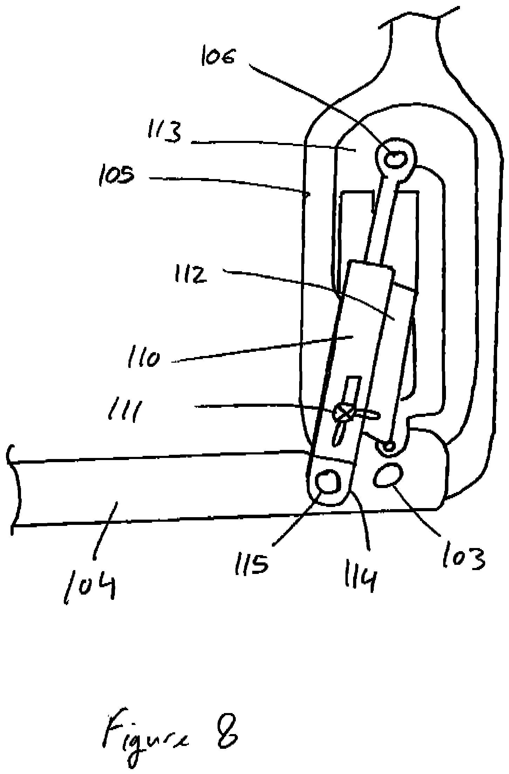

Figure 7 & 8 show an alternative embodiment, in which there is a single stiff in bending actuating member 101 pivoted at point 102 close to a pivot 103 of two actuated limbs 104,105 as in the above embodiment. The members are arranged in the manner of an elbow, with the pivot 102 on the distal limb above the inter-limb pivot 103. The arm extends generally parallel to the proximal limb 105, which can be hollow with the actuating member 101 within it. This member is pivoted, with foreshortening accommodation such as by the pivot bore in one of the pivoted parts being slightly elongate in a direction transverse to pivot force direction, i.e. in the direction of extent of the limb 105. This feature is preferably provide in the actuating member and is too small to show in the drawing. This pivot is numbered 106.

The limb 105 and the actuating member 101 carry complementary electromagnets 107,108. It is to accommodate them that the actuating member is cranked and the limb 105 is bulbous, in the manner of a muscle although the mechanism is quite different. It will be understood by comparison with the previous embodiment that activation of the electromagnets to attract will drop the distal limb and repulsion will lift it.

This embodiment includes an additional feature, namely a lock or brake in the form of a hydraulic strut 110, valve 111 and accumulator 112. At an upper end 113, the strut is pivoted to the proximal limb at the pivot 106, that is without foreshortening facility. At the lower end 114, the strut is pivoted at 115 to the distal limb at a greater lever arm than the pivot 102 and set substantially at 90° to it so that the strut can act in tension, whereas the actuating member acts in bending.

For reciprocating movement of the distal limb, the valve 111 is open, with a hydraulic fluid in it being displaced to and from the accumulator. It does not contribute to movement, because it is not provided with a source of external pressure. However where the distal limb is moved to a positon that it would otherwise maintain only with continued activation of the electromagnets and waste of electricity, the valve is closed at the end of a movement to lock the limb in position.

It is envisaged that the lock could be configured differently possibly as a friction brake. Further the electromagnets could be replaced by another high force low displacement device.

The invention is not intended to be restricted to the details of the above described embodiments. For instance, the electromagnets in pairs can be replaced by one electromagnet and one permanent magnet.

## Claims

1. A device for angularly displacing two members with respect to each other about a pivot, the device comprising:
• a stiff element having opposite end pivots, one to one of the members and the other being a restraining pivot, and
• a force generator arranged to act transversely of the stiff element, which is stiff against bending by force from the generator, and to displace the pivot to the one members, with the members pivot being restrained,
the moment arm of the one pivot of the stiff member to the members' pivot being less than the stiff element's length.

2. A device as claimed in claim 1, wherein the ratio of the stiff element's length to the moment arm is between 2:1 and 20:1, preferably between 2.5:1 and 15:1, more preferably between 3:1 and 10:1 and most preferably between 4:1 and 8:1.

3. A device as claimed in claim 1 or claim 2, wherein the other of the two displaceable members is arranged to extend outside the force generator.

4. A device as claimed in claim 1, claim 2 or claim 3, wherein the restraining pivot is on one of the displaceable members and the force generator is arranged to act between that member and stiff element.

5. A device as claimed in claim 3, wherein the restraining pivot is arranged for foreshortening, preferably with a transverse link or a slot generally aligned with the stiff element.

6. A device as claimed in claim 1, claim 2 or claim 3, including a second stiff element having opposite end pivots, one to the other of the members and the other being common with the restraining pivot of the said stiff element, the two stiff elements arrange in a V configuration, the moment arm of the members pivot being less than the stiff element's length, the moment arm of the one pivots of the stiff members to the members' pivot being substantially equal and the force generator is arranged to act between the two stiff elements.

7. A device as claimed in claim 6, including a further two stiff elements and a further force generator pivotally connected to the members in a corresponding manner.

8. A device as claimed in claim 6 or claim 7, including one or more further sets of two stiff elements and a force generator arranged in W formation between ones of the stiff elements pivoted to the members.

9. A device as claimed in claim 6, claim 7 or claim 8, wherein one force generator or set thereof is adapted to displace the members angularly in one direction and the other is arranged to displace them in the other direction.

10. A device as claimed in claim 7 or claim 8, wherein the force generators are double acting, each being adapted to dispace the members angularly in either direction.

11. A device as claimed in any preceding claim, wherein the force generators are electro magnetic, the or each stiff member carrying a respective electromagnet.

12. A device as claimed in any preceding claim, wherein the or each stiff member and the angularly displaceable members are non-magntic.

13. A device as claimed in any preceding claim, including a lock or brake for holding the members in their relative position to which they are displaceable by the force generator.

14. A device as claimed in claim 13, wherein the lock is a hydraulic piston and cyinder unit having a valve and an accumulator, the valve being arranged to be closed to lock displacement of fluid from the unit on actuation of the force generator.
